# EUROPÄISCHE PATENTSCHRIFT

(11) **EP 2 424 721 B1**
(45) Veröffentlichungstag und Bekanntmachung des Hinweises auf die Patenterteilung: **06.01.2016**
(21) Anmeldenummer: 10718480.6
(22) Anmeldetag: 23.04.2010
(51) Int. Cl.: B29C 47/30, B29B 9/06, D01D 4/02

(54) **DÜSENPLATTE MIT KONVEX ANGEORDNETEN DÜSEN SOWIE DIE VERWENDUNG DIESER.**
NOZZLE PLATE HAVING NOZZLES DISPOSED CONVEXLY AND THE USE OF THE SAME
PLAQUE PORTE-BUSES, À BUSES MONTÉES CONVEXE, ET SON UTILISATION

(30) Priorität: 28.04.2009 DE 102009019176
(43) Veröffentlichungstag der Anmeldung: 07.03.2012
(73) Patentinhaber: AKRO-PLASTIC GmbH, 56651 Niederzissen (DE)
(72) Erfinder: WELTER, Jürgen, 53426 Schalkenbach (DE)
(74) Vertreter: Schweitzer, Klaus
(86) Internationale Anmeldenummer: PCT/EP2010/002499
(87) Internationale Veröffentlichungsnummer: WO 2010/124814

(56) Entgegenhaltungen:
- WO-A2-2006/102143
- DE-A1- 1 937 547
- DE-A1- 3 839 781
- GB-A- 402 449
- JP-A- 4 136 207
- JP-A- 57 077 308
- US-A- 2 370 765
- US-A- 3 973 890
- US-A- 6 158 681

## Beschreibung

Die vorliegende Erfindung betrifft eine konkav-konvexe Düsenplatte mit einer Anordnung der Düsen auf der konvexen Seite, die z. B. zur Extrusion von Schmelzen in der Stranggranulation geeignet ist. Weiterhin betrifft die Erfindung die Verwendung dieser Düsenplatte für die Extrusion von Schmelzen, ein entsprechendes Verfahren unter Einsatz der Düsenplatte sowie eine Extrusionsvorrichtung, die mit dieser Düsenplatte ausgerüstet ist.

Düsenplatten für Extrusionsvorrichtungen sind aus der Kunststoffverarbeitung vielfältig bekannt. Durch diese Düsenplatte wird die verflüssigte Kunststoffmasse gepresst, die z. B. nach dem Stranggießverfahren verarbeitet wird.

Zur Steigerung der Wirtschaftlichkeit besteht hier grundsätzlich die Forderung nach Durchsatzsteigerung bei Extrusionsanlagen. Ein wesentliches limitierendes Merkmal zur Erzielung von erhöhten Durchsätzen ist die Anordnung und die Anzahl der Düsen in der Düsenplatte im Kopf des Extruders. Die Anzahl der Düsen kann bei einer gegebenen Kopfbreite nicht beliebig vergrößert werden, da bei abnehmendem Abstand der extrudierten Stränge zueinander die Wahrscheinlichkeit von Strangabrissen durch Fluktuation der Stränge steigt. Somit besteht die übliche Vorgehensweise bei maximaler Ausnutzung der verfügbaren Fläche in der Steigerung der Abzugsgeschwindigkeit. Höhere Abzugsgeschwindigkeiten haben jedoch ein unruhigeres Laufverhalten und eine Verschlechterung der Prozesssicherheit zur Folge.

Allen bekannten Geometrien für Düsenplatten ist gemeinsam, dass die Druckverteilung über die Düsenplatte inhomogen ist und der Druck von den äußeren Strängen zu den inneren Strängen hin variiert. Dadurch laufen die Stränge im Randbereich der Düsenplatte unruhig und mit unterschiedlicher Austrittsgeschwindigkeit gegenüber der Düsenplattenmitte, was die Gefahr für Strangabrisse deutlich erhöht und gleichzeitig die maximal mögliche Abzugsgeschwindigkeit bzw. maximale Durchsatzleistung pro Düse begrenzt.

Ein weiteres Problem ist die Strangführung von der Düsenplatte weg zur ersten Abzugsrolle und deren Umlenkung. Mit steigendem Umlenkwinkel vom Strangaustritt aus der Düse zur Position in der Strangführung hin steigt die Wahrscheinlichkeit des Strangabrisses.

Aus DD 133 918 ist bekannt, dass die Prozessstabilität und Durchsatzoptimierung durch stegartige Verbindungen zwischen den einzelnen Strängen erreicht werden können. Diese werden durch stegartige Schlitze erzeugt, welche die einzelnen Düsen miteinander verbinden. Nachteilig ist hier insbesondere die störende Anhaftung der Fahnen an den Strängen, die gerade bei der weiteren Verarbeitung vermieden werden soll. Hinzu kommen Materialverluste durch die Stege und erhöhter Ausschuss in der Granulierung.

Das Problem der ungleichmäßigen Verteilung einer (Kunststoff-) Schmelze auf eine Vielzahl von Düsenbohrungen ist in DE-C-33 34 870 beschrieben. Die genannte Lösung des Problems durch einen neuen Düsenkopf setzt einen hohen apparativen Aufwand voraus und erfordert gleichzeitig die Verwendung von zusätzlichen verdampfbaren Flüssigkeiten im Prozess, da der Düsenkopf zusätzlich mit einem Staubalken und Temperaturausgleichskammern für den Druckausgleich versehen ist. Probleme der Durchsatzsteigerung und Prozesssicherheit werden nicht erwähnt.

Des Weiteren werden im Stand der Technik auch Modifikationen bei der Form oder Anordnung der Düsen auf der Düsenplatte beschrieben.

DE-A-26 36 998 beschreibt eine Düsenplatte zum Ziehen von Glasfasern, bei der die Düsen satzweise angeordnet sind, wobei jeder Düsensatz von einem anderen einen Abstand aufweist, der größer ist als der Abstand zwischen den Düsen eines Düsensatzes.

In der WO 2005/056891 A2 wird eine Düsenplatte für Extrusionsvorrichtungen für Kunststoffe gezeigt, mit der Hohlfasern hergestellt werden können. Die Düsenöffnung weist dabei Ausläufer auf, die auf einer Bogenlinie angeordnet sind. Schließlich beschreibt die DE-C-20 11 139 eine Düsenplatte für eine Presse für die Herstellung von Teigwaren, bei der die Wandungen der Düsen federelastisch ausgebildet sind.

All diesen im Stand der Technik auf verschiedenen Anwendungsgebieten beschriebenen Düsenplatten ist gemeinsam, dass sie planar oder horizontal ausgebildet sind.

Aus DE 92 12 128 U1 ist aber auch bereits eine konkav-konvexe Düsenanordnung zur Extrusion von Pulvermassen bekannt. Die Anordnung wurde zur Vermeidung der Verstopfung von Düsen bei kleinen Düsendurchmessern gewählt, zusätzlich ist in der erfindungsgemäßen Ausführung ein Räumflügel notwendig. Für eine Stranggranulierung und für schmelzeflüssige Stränge ist diese Anordnung aufgrund der Düsenanordnung technisch unbrauchbar, insbesondere deshalb, weil die Umlenkwinkel der austretenden Stränge an den Randbereichen der Düse zu groß sind; die Stränge werden gedehnt oder reißen sogar ab. Außerdem verursacht der Räumflügel zusätzliche Pulsationen, die in der Stranggranulierung unerwünscht sind. Weiterhin sieht die Düsenvorrichtung gemäß DE 92 12 128 U1 gestanzte Bleche mit dünnen Wandstärken im Bereich einiger Millimeter vor, die den bei der Kunststoffextrusion auftretenden Drücken nicht standhalten würden.

Schließlich sind aus der RU 2205104 C1 Düsenöffnungen bekannt, deren Öffnungen auf einem Kreisbogen angeordnet sind; allerdings sind die Düsen selbst parallel angeordnet, so daß die extrudierten Stränge wie bei konventionellen Vorrichtungen parallel laufen und somit keine Verbesserung bezüglich Durchsatz und Laufsicherheit erlauben. Die Druckverteilung ist in dieser Anordnung ebenfalls mit konventionellen Vorrichtungen vergleichbar.

Die Druckschriften US 6 158 681 A, DE 19 37 547 A1, GB 402 449 A und WO 2006/102143 A2 offenbaren weitere Düsenplatten.

Die Aufgabe der vorliegenden Erfindung bestand demnach darin, eine Düsenplatte zur Verfügung zu stellen, welche die Nachteile der bisher bekannten Konstruktionen vermeidet und eine Steigerung der Prozesssicherheit bei hohem Durchsatz ermöglicht.

Die Aufgabe wird durch eine Düsenplatte gemäß Anspruch 1 und den davon abhängigen Ansprüchen gelöst.

Das der Erfindung zugrundeliegende Prinzip oder Merkmal ist die Erhöhung der Anzahl der Düsen bzw. die Vergrößerung der zur Verfügung stehenden Extrusionsfläche durch Wahl einer nicht-planaren Anordnung der Düsen. Insbesondere konkav-konvexe Konstruktionen und bogenförmige Konstruktionen (Kreisbogensegment) erweisen sich als geeignet. Prinzipiell kann durch die neuartige Konstruktion bei gegebener Düsenanzahl ein größerer Abstand der Düsen zueinander unter Vermeidung der oben genannten Nachteile erreicht werden. Alternativ kann unter Beibehaltung des Abstandes eine höhere Anzahl von Düsen realisiert werden, so dass die Abzugsgeschwindigkeit verringert und somit entweder die Prozesssicherheit und/oder der Durchsatz gesteigert werden können. Kombinationen beider Ansätze, d. h. Erhöhung von Düsenanzahl und Abstand, sind möglich.

Ein weiterer Vorteil der erfindungsgemäßen Düsenplatte ist eine gleichmäßigere Druckverteilung im Düsenkopf, so dass eine homogenere Austrittsgeschwindigkeit der einzelnen Stränge unter Vermeidung der oben beschriebenen Nachteile erreicht wird. Zusätzlich wird durch die Auffächerung der Stränge der Winkel bei der nachfolgenden Umlenkung der Stränge, wie beispielsweise beim Eintritt an der ersten Rollenführung im Wasserbad, verringert, so dass auch hierdurch eine höhere Prozess-Sicherheit erzielt werden kann.

Es ist für die technische Verbesserung wesentlich, dass neben dem gleichmäßigen Druckaufbau einerseits der Strang in radialer Richtung (bezogen auf das Zentrum des Kreisbogensegmentes) koaxial aus dem Düsenkanal und rechtwinklig zum Zentrum der Düsenöffnung auf dem Kreisbogensegment austritt und andererseits durch die Auffächerung der Stränge infolge der größeren verfügbaren Fläche durch die konvexe Anordnung eine minimale Umlenkung der Stränge aus der radialen Richtung in die Abzugsrichtung (die der Senkrechten auf eine planare Düsenplatte entspricht) auf der Fadenstrecken erfolgt.

Die erfindungsgemäße Düsenplatte ist nicht planar sondern konkav-konvex ausgebildet, wobei der Austritt der Schmelze, Paste oder Formmasse auf der konvexen Seite der Düsenplatte erfolgt. Somit liegen die Düsen (auf der Düsenplatte) auf einem Polygonausschnitt und bevorzugt auf einem Kreisausschnitt. Die Anordnung der Düsen auf der konkav-konvexen Düsenplatte (Düsenmuster) kann grundsätzlich beliebig sein, bevorzugt ist eine regelmäßige Anordnung in Reihen bzw. auf Kreisbögen.

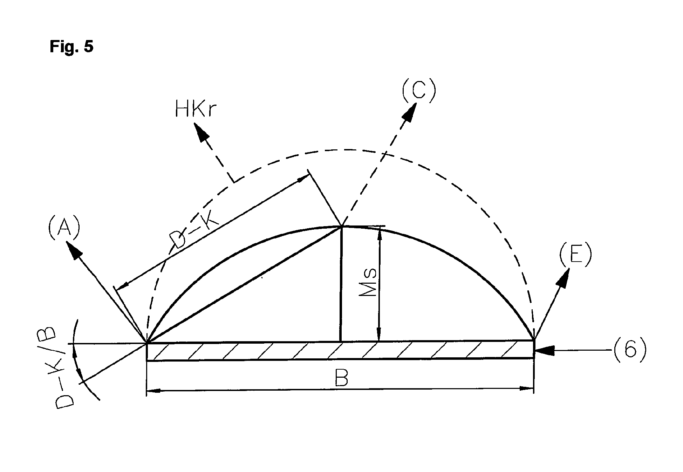

Dabei ist der Kreisbogen so ausgestaltet, dass seine gestreckte Länge (A-C-E) mindestens größer als die Gesamtbreite des Schmelzekanals (B), aber kleiner als die gestreckte Länge des auf der Breite des Schmelzekanals konstruierten Halbkreises (HKr) ist. Die Ausführung wird anhand des Winkels (D-K/B) beschrieben, der zwischen der planen Schmelzekanalbreite (B) und der Verbindung vom inneren Düsenrand zum Schnittpunkt des Kreisbogens (Düsenplattenbogens) mit der Mittelsenkrechten (Ms) über der Schmelzekanalbreite (B) aufgespannt wird (zwischen D-K und B, siehe Figur 5). Die erfindungsgemäße Düsenplatte weist einen Winkel gemäß dem Anspruch 1.

Bevorzugt sind Winkel zwischen 8° und 22°, besonders bevorzugt 12°. Diese Beschreibung ist auf Polygone entsprechend anzuwenden. Bevorzugt weist die erfindungsgemäße Düsenplatte 5 bis 1000 Düsen, insbesondere 5 bis 150 Düsen und besonders bevorzugt 5 bis 50 Düsen, auf. Diese sind bevorzugt in 1 bis 10 Reihen bzw. Kreisbögen, insbesondere in 1 bis 5 Reihen und besonders bevorzugt in 1 bis 3 Reihen auf der Düsenplatte angeordnet. Die Düsenplatte selbst kann dementsprechend als Zylinderflächensegment (bei Reihenanordnung) oder Sphäroidflächensegment (bei Kreisbogenanordnung) beschrieben werden.

Die Düsen können als Bohrungen in der Düsenplatte oder als in Bohrungen der Düsenplatte eingesetzte Düsen mit oder ohne elastische Wandungen ausgebildet sein. Die Düsenform ist grundsätzlich beliebig und richtet sich nach dem Einsatzzweck. Bei dem Hauptanwendungsgebiet der Kunststoffverarbeitung ist eine kreisrunde Düsenform bevorzugt.

Die Düsen selbst weisen zumindest einen zylinderförmigen Teil auf, der innerhalb der Düsenplatte so angeordnet ist, dass die Düsenzylinderachse durch den Mittelpunkt der Kugel des die Düsenplatte bildenden Sphäroidflächensegmentes verläuft oder senkrecht auf der Rotationsachse des Zylinders des die Düsenplatte bildenden Zylinderflächensegmentes steht. Diese Beschreibung ist auf Polygone entsprechend anzuwenden.

Die erfindungsgemäße Düsenplatte weist typischerweise Materialstärken größer 10 mm auf, um den im Extrusionskopf herrschenden Schmelzedrücken zu widerstehen.

Als Material eignen sich verschleißfeste Werkstoffe, bevorzugt pulvermetallurgische Stähle, Chrom-, Nitrier- sowie Vergütungsstähle.

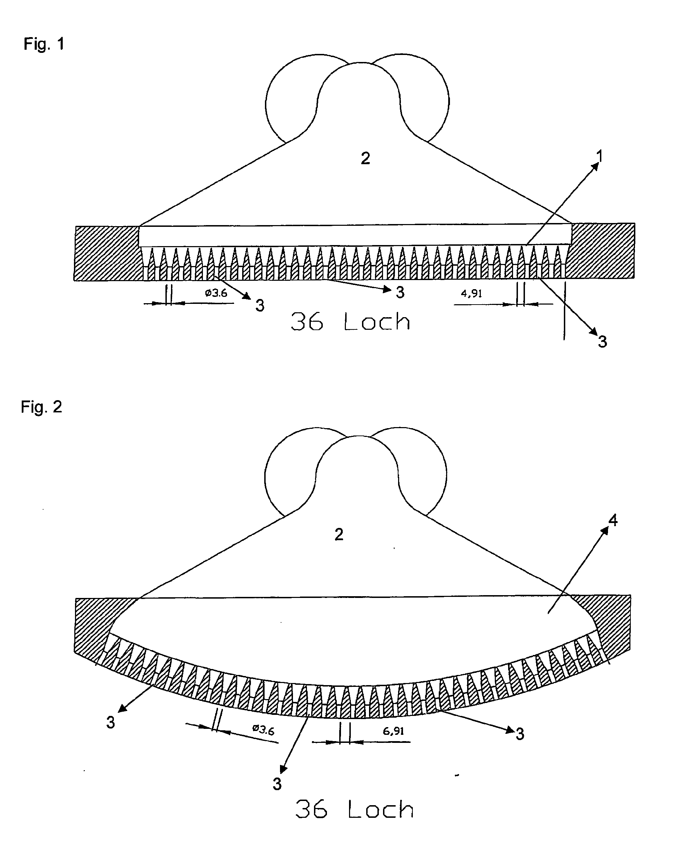

Die erfindungsgemäße Düsenplatte eignet sich generell zur Extrusion von Schmelzen, die nach dem Stranggießverfahren verarbeitet werden. Typische Schmelzen sind thermoplastische Kunststoffe wie Polyolefine, technische Kunststoffe, thermoplastische Elastomere, vulkanisierfähige oder vernetzbare Formmassen wie Gummi, Latex und vernetzte Elastomere, Metalle, Metalllegierungen, Glasfasern, ferner Schmelzen, Formmassen und Pasten aus den Bereichen Kosmetik, Lebensmittel, Wachse, kompaktierte Wasch- und Reinigungsmittel. Insbesondere eignet sich die Düsenplatte auch zur Herstellung von Fasersträngen wie Glasfasern und Textilfasern. Die Größe der Düsenöffnung wird an das entsprechende Einsatzgebiet angepasst und ist dem Fachmann bekannt. Der Einsatz der erfindungsgemäßen Düsenplatte wird nachfolgend am Beispiel des bevorzugten Einsatzgebiets, d. h. als Düsenplatte für eine Extrusionsvorrichtung bei der Verarbeitung von Kunststoffschmelzen nach dem Stranggießverfahren, näher erläutert:
Die Düsenplatte mit konkaver Düsenanordnung (von der Extruderseite aus gesehen; vgl. Fig. 2) wird an Stelle der üblichen, planen Düsenplatte am Stranggießer bzw. Extrusionskopf befestigt.

Beim Verarbeitungsprozess wird die durch den Ein- oder Mehrwellenextruder plastifizierte Schmelze durch den Extruder selbst oder durch eine nachgeschaltete Schmelzepumpe oder Austragsschnecke dem Stranggießer zugeführt. Im Stranggießer erfolgt in der Regel eine Verteilung der Schmelze auf den jeweiligen Eingangsquerschnitt der Düsenplatte. Die Schmelze verteilt sich gleichmäßig in der konkaven Düsenplattenkammer und wird durch die Düsen gepresst. Auf der konvexen Seite der Düsenplatte tritt die zu Strängen oder Fasern geformte Schmelze aus und wird der nachfolgenden Strang- oder Unterwasserstranggranulierung zugeführt oder auf anderem Wege weiterverarbeitet.

Die nachfolgend aufgeführten Figuren dienen zur beispielhaften weiteren Erläuterung der Erfindung:
Fig. 1 zeigt eine planare Düsenplatte nach dem Stand der Technik (1), die an einem Stranggießer, Extrusionskopf, am Ausgang einer Schmelzepumpe oder einer Presse (2) befestigt ist (für die Zwecke der Erfindung auch Extrusionsvorrichtung genannt), mit Düsen oder Düsenbohrungen (3). Im hier gezeigten Beispiel: 36 Düsen mit einem Durchmesser von 3,6 mm und einem Abstand zwischen den Düsen von 4,9 mm.
Fig. 2 zeigt die konkav-konvexe Düsenplatte gemäß der vorliegenden Erfindung (4) (mit der konkaven Seite der Düsenplatte an der Extrusionsvorrichtung (2) befestigt). Diese weist bei gleicher Anschlussbreite an die Vorrichtung (2) ebenfalls 36 Düsen - hier jedoch in konvexer Anordnung - (3) mit einem Durchmesser von 3,6 mm auf. Aufgrund der erfindungsgemäßen konvexen Düsenanordnung beträgt der Abstand zwischen den Düsen jedoch 6,9 mm.

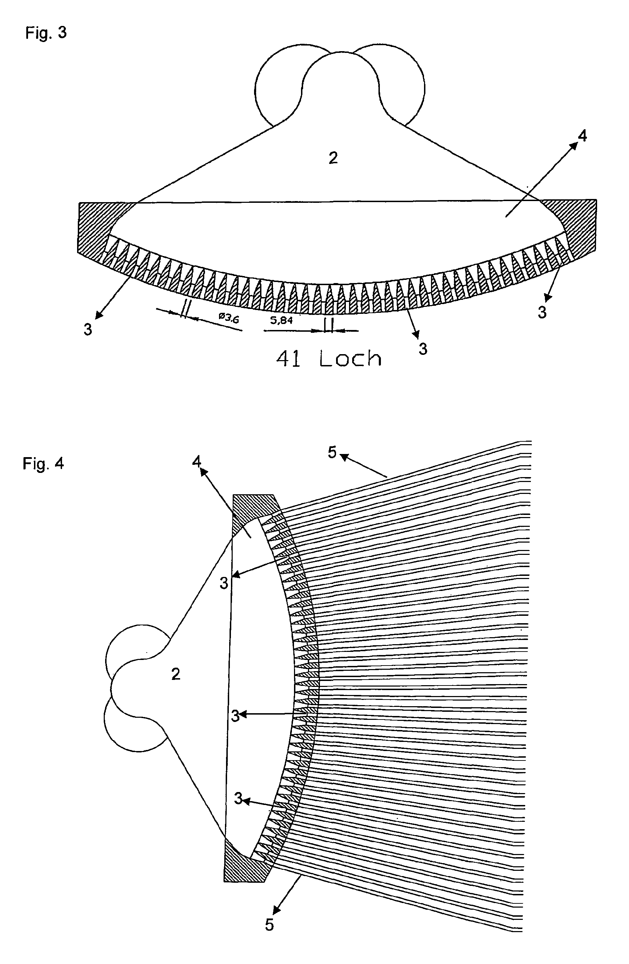

Fig. 3 entspricht Fig. 2 mit dem Unterschied, dass bei gleicher Anschlussbreite der Düsenabstand auf 5,8 mm reduziert und dadurch die Düsenzahl bei gleichem Durchmesser von 3,6 mm auf 41 erhöht wird.
Fig. 4 zeigt wie bei der erfindungsgemäßen Düsenplatte (4) die extrudierten Stränge (5) in aufgefächerter Form und mit großem Abstand zueinander aus der konvexen Seite der Düsenplatte (4) austreten.

Die vorliegende Erfindung umfasst somit neben der bereits beschriebenen Düsenplatte und deren Verwendung zur Extrusion von Schmelzen, Pasten und Formmassen auf den verschiedensten Anwendungsgebieten und in den Bereichen Compoundierung, Aufarbeitung und Masterbatchherstellung auch eine Extrusionsvorrichtung, z. B. in Form eines Ein- oder Mehrwellenextruders, einer Presse oder einer Schmelzepumpe, welche die erfindungsgemäße Düsenplatte aufweist, und die Verwendung dieser Vorrichtung in den obengenannten Anwendungsgebieten und Bereichen.

Die Erfindung wird durch die nachfolgenden Beispiele weiter erläutert, ohne auf diese beschränkt zu sein. Die in den Beispielen und in den Figuren genannten Parameter sind einzeln allgemeingültig für die vorliegende Erfindung und nicht auf die in den Beispielen oder Figuren genannten speziellen Parameterkombinationen beschränkt.

### Beispiele

Auf einem Doppelschneckenextruder wird ein Poly(butylenterephthalat)-Compound in üblicher Spritzgussqualität (Rohstoff-MVR bei 250°C / 2,16 kg von 38 cm³/10 min) mit 30 % Glasfaserverstärkung gefahren.

### Vergleichsbeispiel 1

Anbau einer konventionellen, planaren Düsenplatte mit 36 Düsen einreihig, Durchsatzleistung des vorgeschalteten Doppelschneckenextruders von 1700 kg/h, Abzugsgeschwindigkeit des Stranggranulators nachfolgend des Strangkühlbades und der Strangtrockenstrecke von 140 m/min.

### Ergebnisbeschreibung:

Die austretenden Stränge weisen aufgrund einer ungleichmäßigen Druckverteilung der Schmelze vor der Düsenplatte einen unterschiedlichen Durchmesser von 3 bis 4 mm auf.

Der Stranggranulator hat mit 140 m/min seine maximale Abzugsgeschwindigkeit erreicht.

Die Düsenanzahl lässt sich nicht weiter erhöhen, da der Abstand der austretenden Stränge zueinander nur noch ca. 5 mm beträgt und dieser nicht weiter zu verringern ist, da bereits gelegentlich ein Zusammenkleben einzelner Stränge zu beobachten ist.

Das Laufverhalten der Stränge ist unruhig, es treten gelegentliche Strangabrisse auf.

### Vergleichsbeispiel 2

Anbau einer konventionellen, planaren Düsenplatte mit 40 Düsen, zweireihig, Durchsatzleistung des vorgeschalteten Doppelschneckenextruders von 1700 kg/h, Abzugsgeschwindigkeit des Stranggranulators nachfolgend des Strangkühlbades und der Strangtrockenstrecke von 123 m/min.

### Ergebnisbeschreibung:

Die austretenden Stränge weisen aufgrund einer ungleichmäßigen Druckverteilung der Schmelze vor der Düsenplatte erneut einen unterschiedlichen Durchmesser von 3 bis 4 mm auf.

Der Stranggranulator hat mit 123 m/min 88 % seiner maximalen Abzugsgeschwindigkeit erreicht.

Das Laufverhalten der Stränge ist sehr unruhig, es treten häufig Strangabrisse auf.

### Beispiel 1

Anbau einer konkav-konvexen Düsenplatte mit 41 Düsen einreihig, Durchsatzleistung des vorgeschalteten Doppelschneckenextruders von 1700 kg/h, Abzugsgeschwindigkeit des Stranggranulators nachfolgend des Strangkühlbades und der Strangtrockenstrecke von 120 m/min.

### Ergebnisbeschreibung:

Die austretenden Stränge weisen aufgrund einer gleichmäßigeren Druckverteilung der Schmelze in der konkaven Düsenplattenkammer einen fast gleichmäßigen Durchmesser von 3,4 bis 3,8 mm auf.

Der Stranggranulator wird mit 120 m/min, 85 % seiner maximalen Abzugsgeschwindigkeit, betrieben.

Das Laufverhalten der Stränge ist ruhig und gleichmäßig, es treten keine Strangabrisse auf.

### Beispiel 2

Wiederum Anbau der Düsenplatte aus Beispiel 1 mit 41 Düsen, einreihig, Durchsatzleistung des vorgeschalteten Doppelschneckenextruders von 2000 kg/h, Abzugsgeschwindigkeit des Stranggranulators nachfolgend des Strangkühlbades und der Strangtrockenstrecke von 140 m/min.

### Ergebnisbeschreibung:

Die austretenden Stränge weisen erneut aufgrund der gleichmäßigeren Druckverteilung der Schmelze in der konkaven Düsenplattenkammer einen fast gleichmäßigen Durchmesser von 3,4 bis 3,8 mm auf.

Der Stranggranulator wird aufgrund des höheren Durchsatzes nun wie im Vergleichsbeispiel 1 mit 140 m/min, 100 % seiner maximalen Abzugsgeschwindigkeit, betrieben.

Das Laufverhalten der Stränge ist ruhig und gleichmäßig.

Die Düsenanzahl lässt sich unter Verwendung der konkav-konvexen Bauform im Vergleich zur einreihigen, planaren 36 Loch-Düsenplatte noch auf 45 Loch erhöhen, bis der Abstand der austretenden Stränge zueinander ebenfalls ca. 5 mm beträgt (vgl. Vergleichsbeispiel 1). Der Durchsatz kann bei Verwendung der beschriebenen 45 Loch-Düsenplatte auf ca. 2125 kg/h angehoben werden, und trotz höherer Ausstoßleistung wird der Produktionsverlust durch Strangabrisse reduziert.

## Patentansprüche

1. Konkav-konvexe Düsenplatte, bei der die Düsen auf der konvexen Seite der Düsenplatte angeordnet sind, wobei die Düsenplatte die Form eines Sphäroidflächensegmentes oder Zylinderflächensegmentes besitzt und wobei die Düsen selbst zumindest einen zylinderförmigen Teil aufweisen, der innerhalb der Düsenplatte so angeordnet ist, dass die Düsenzylinderachse durch den Mittelpunkt der Kugel des die Düsenplatte bildenden Sphäroidflächensegmentes verläuft oder senkrecht auf der Rotationsachse des Zylinders des die Düsenplatte bildenden Zylinderflächensegmentes steht, **dadurch gekennzeichnet, dass** der Winkel (D-K/B), der zwischen der planen Schmelzekanalbreite (B) und der Verbindung vom inneren Düsenrand zum Schnittpunkt des Düsenplattenbogens mit der Mittelsenkrechten (Ms) über der Schmelzekanalbreite (B) aufgespannt wird, größer 0° und kleiner 22° beträgt.

2. Düsenplatte nach Anspruch 1, **dadurch gekennzeichnet, dass** die Düsen auf einem Polygonausschnitt liegen.

3. Düsenplatte nach Anspruch 1 oder 2, **dadurch gekennzeichnet, dass** die Düsen auf einem Kreisausschnitt oder Kreisbogen liegen.

4. Düsenplatte nach einem oder mehreren der Ansprüche 1 bis 3, **dadurch gekennzeichnet, dass** der Winkel (D-K/B) 12° beträgt.

5. Düsenplatte nach einem oder mehreren der Ansprüche 1 bis 4, **dadurch gekennzeichnet, dass** die Düsenplatte 5 bis 1000, bevorzugt 5 bis 150 und besonders bevorzugt 5 bis 50 Düsen in einer bis fünf Reihen aufweist.

6. Düsenplatte nach einem oder mehreren der Ansprüche 1 bis 5, **dadurch gekennzeichnet, dass** die Düsen als Bohrungen oder als in Bohrungen eingesetzte Düsen mit oder ohne elastische Wandungen ausgeführt sind.

7. Extrusionsvorrichtung, die eine Düsenplatte nach einem oder mehreren der Ansprüche 1 bis 6 aufweist.

8. Verwendung einer Düsenplatte nach einem oder mehreren der Ansprüche 1 bis 6 bei der Verarbeitung von Schmelzen, Pasten oder Formmassen.

9. Verwendung nach Anspruch 8 bei der Extrusion von thermoplastischen Kunststoffschmelzen, vulkanisierfähigen oder vernetzbaren Formmassen, Glas, Metallen oder Lebensmitteln.

10. Verwendung nach Anspruch 8, zur Stranggranulierung, Unterwassergranulierung oder Bandgranulierung.

11. Verwendung einer Extrusionsvorrichtung nach Anspruch 7 bei der Extrusion von thermoplastischen Kunststoffschmelzen, vulkanisierbaren oder vernetzbaren Formmassen, Glas, Metallen oder Lebensmitteln.

## Claims

1. Concave-convex die plate, in which the dies are disposed on the convex side of the die plate, the die plate having the form of a spheroid surface segment or cylinder surface segment and the dies themselves having at least one cylindrical part, which is disposed within the die plate in such a way that the die cylinder axis passes through the centre point of the sphere of the spheroid surface segment forming the die plate or is perpendicular to the axis of rotation of the cylinder of the cylinder surface segment forming the die plate, **characterized in that** the angle (D-K/B) that is formed between the planar melt flow-way width (B) and the connection from the inner die periphery to the point of intersection of the die plate arc with the centre perpendicular (Ms) over the melt flow-way width (B) is greater than 0° and less than 22°.

2. Die plate according to Claim 1, **characterized in that** the dies lie on a sector of a polygon.

3. Die plate according to Claim 1 or 2, **characterized in that** the dies lie on a sector of a circle or arc of a circle.

4. Die plate according to one or more of Claims 1 to 3, **characterized in that** the angle (D-K/B) is 12°.

5. Die plate according to one or more of Claims 1 to 4, **characterized in that** the die plate has 5 to 1000, preferably 5 to 150 and particularly preferably 5 to 50, dies in one to five rows.

6. Die plate according to one or more of Claims 1 to 5, **characterized in that** the dies are designed as bores or as dies inserted in bores with or without elastic walls.

7. Extrusion device that has a die plate according to one or more of Claims 1 to 6.

8. Use of a die plate according to one or more of Claims 1 to 6 in the processing of melts, pastes or moulding compounds.

9. Use according to Claim 8 in the extrusion of thermoplastic polymer melts, vulcanizable or crosslinkable moulding compounds, glass, metals or foods.

10. Use according to Claim 8, for strand pelletizing, underwater pelletizing or strip pelletizing.

11. Use of an extrusion device according to Claim 7 in the extrusion of thermoplastic polymer melts, vulcanizable or crosslinkable moulding compounds, glass, metals or foods.

## Revendications

1. Plaque porte-buses convexe et concave, pour laquelle les buses sont agencées sur le côté convexe de la plaque porte-buses, la plaque porte-buses possédant la forme d'un segment de surface sphéroïdale ou d'un segment de surface cylindrique et les buses présentant elles-mêmes au moins une partie cylindrique qui est agencée dans la plaque porte-buses de sorte que l'axe cylindrique de buse s'étende par le point médian des sphères du segment de surface sphéroïde formant la plaque porte-buses ou se trouve perpendiculaire à l'axe de rotation du cylindre du segment de surface cylindrique formant la plaque porte-buses, **caractérisée en ce que** l'angle (D-K/B) qui est défini entre la largeur de canal de coulée plane (B) et la liaison du bord de buse intérieur à l'intersection de l'arc de plaque porte-buses avec la perpendiculaire médiane (Ms) sur la largeur de canal de coulée (B), soit supérieur à 0° et inférieur à 22°.

2. Plaque porte-buses selon la revendication 1, **caractérisée en ce que** les buses se trouvent sur un secteur polygonal.

3. Plaque porte-buses selon la revendication 1 ou 2, **caractérisée en ce que** les buses se trouvent sur un secteur circulaire ou un arc de cercle.

4. Plaque porte-buses selon l'une ou plusieurs quelconques des revendications 1 à 3, **caractérisée en ce que** l'angle (D-K/B) s'élève à 12°.

5. Plaque porte-buses selon l'une ou plusieurs quelconques des revendications 1 à 4, **caractérisée en ce que** la plaque porte-buses présente 5 à 1000, de préférence 5 à 150 et de manière particulièrement préférée 5 à 50 buses dans une à cinq rangées.

6. Plaque porte-buses selon l'une ou plusieurs quelconques des revendications 1 à 5, **caractérisée en ce que** les buses sont réalisées comme des perçages ou comme des buses insérées dans des perçages avec ou sans parois élastiques.

7. Dispositif d'extrusion qui présente une plaque porte-buses selon l'une ou plusieurs quelconques des revendications 1 à 6.

8. Utilisation d'une plaque porte-buses selon l'une ou plusieurs quelconques des revendications 1 à 6 lors du traitement de fontes, pâtes ou matières de moulage.

9. Utilisation selon la revendication 8 lors de l'extrusion de fontes thermoplastiques, matières de moulage vulcanisables ou réticulables, verres, métaux ou aliments.

10. Utilisation selon la revendication 8 pour la granulation en tronçon, la granulation sous eau ou la granulation en bande.

11. Utilisation d'un dispositif d'extrusion selon la revendication 7 lors de l'extrusion de fontes thermoplastiques, matières de moulage vulcanisables ou réticulables, verres, métaux ou aliments.
